Europäisches Patentamt

European Patent Office

Office européen des brevets

(19)

(11) Numéro de publication : **0 336 048 B1**

(12)

# FASCICULE DE BREVET EUROPEEN

(45) Date de publication du fascicule du brevet :
14.08.91 Bulletin 91/33

(51) Int. Cl.⁵ : **A01J 25/02, B01L 1/02**

(21) Numéro de dépôt : **88402684.0**

(22) Date de dépôt : **25.10.88**

(54) Procédé et dispositif de prélèvement d'échantillons et/ou d'introduction d'additifs au continu d'au moins une cuve de traitement.

(30) Priorité : 01.04.88 FR 8804376
20.07.88 FR 8809812

(43) Date de publication de la demande :
11.10.89 Bulletin 89/41

(45) Mention de la délivrance du brevet :
14.08.91 Bulletin 91/33

(84) Etats contractants désignés :
AT BE CH DE ES GB GR IT LI LU NL SE

(56) Documents cités :
FR-A- 2 254 409
US-A- 2 746 847

(56) Documents cités :
US-A- 3 988 011
Netherlands milk and dairy journal vol. 29, no.
2/3, 1975, Wageningen page 295 - 302; G.Kle-
ter: "Apparatus for making cheese under
aseptic conditions"

(73) Titulaire : GOAVEC S.A. SOCIETE DITE :
13, Rue Eiffel
Alencon (Orne) (FR)

(72) Inventeur : Helaine, Christian
19 rue Achille Oudinot
Damigni Orne (FR)

(74) Mandataire : Cabinet Pierre HERRBURGER
115, Boulevard Haussmann
F-75008 Paris (FR)

## Description

La présente invention concerne un procédé de prélèvement d'échantillons et/ou d'introduction d'additifs au contenu d'une cuve de traitement étanche munie d'organes de pressurisation, ainsi que d'un orifice de prélèvement et d'introduction, permettant d'éviter la recontamination du contenu de la cuve lors de l'ouverture de cet orifice par l'atmosphère poluée environnant.

Dans de nombreuses industries, en particulier, les industries alimentaires ou pharmaceutiques, la lutte contre les contaminations de toutes sortes constitue un problème crucial, la conservation de l'aseptie des produits traités est une nécessité fondamentale.

Ces nécessités liées à des considérations élémentaires d'hygiène augmentent souvent dans une large mesure le coût des installations, et ce sans permettre d'obtenir malgré tout de résultats satisfaisants.

Les industries laitières ou fromagères constituent un exemple particulièrement représentatif des problèmes susmentionnés.

La première opération du processus de fabrication des fromages, consiste en effet à cultiver, au niveau du laboratoire, des ferments destinés à permettre la coagulation ou maturation du lait, par des mélanges de germes plus ou moins sophistiqués ; on obtient, ainsi des cultures mères que l'on fait croître dans des cuves de procédé dont la contenance est environ de l'ordre de 1000 à 60000 litres. De telles cuves de traitement contiennent du lait préalablement stérilisé ou pasteurisé qui doit être ramené à la température la plus favorable au développement des cultures utilisées par réfrigération interne ou externe de la cuve de procédé.

Le nouveau milieu ainsi cultivé est ensuite transféré dans des canalisations pour être utilisé dans les organes de la ligne de fabrication du fromage situés en aval.

Les cuves de procédé constituent donc le coeur d'une fromagerie : il est bien entendu essentiel que la partie interne de celles-ci soit toujours maintenue sous pression stérile et exempte de germes microbiens parasites, afin d'empêcher toute contamination. Compte tenu de l'étanchéité de ces cuves, les problèmes de contamination se posent avant tout lorsqu'il est nécessaire d'ouvrir l'orifice de prélèvement et/ou d'introduction, pour incorporer la culture mère, ou d'autres additifs tels que par exemple du chlorure de calcium facilitant la coagulation du lait, ou encore prélever des échantillons du contenu de la cuve de traitement lorsque cela s'avère nécessaire.

Pour remédier à ce problème, on a pensé à munir les cuves de fermentation d'organes de pressurisation permettant de maintenir leur partie interne à une pression légèrement supérieure à la pression ambiante (de l'ordre de 20 mb à 4000 mbars) empêchant par suite tout échange de germes pathogènes avec l'atmosphère ; un tel procédé ne peut cependant être mis en oeuvre que pour l'introduction dans la cuve de fermentation de cultures mères se trouvant sous forme liquide, et pouvant être amenées sous pression par des canalisations annexes.

Cependant, ces cultures mères qui doivent être ajoutées en une quantité pouvant aller jusqu'à 3% en poids se trouvent souvent à l'état congelé ou lyophilisé et doivent donc obligatoirement être introduites à partir d'un orifice de prélèvement et d'introduction prévu à cet effet sur la cuve ; cet orifice ou trou d'homme sert également à permettre l'addition d'autres produits liquides, notamment du chlorure de calcium ou encore le prélèvement d'échantillons du contenu de la cuve. Or, l'ouverture de l'orifice susmentionné pour la mise en oeuvre de telles opérations de prélèvement ou d'introduction d'additifs ne peut être effectuées que lorsque la pression régnant à l'intérieur de la cuve correspond à la pression du local dans lequel elle se trouve, entraînant par suite un échange d'air entre ces volumes par convection et des risques de contamination du produit traité à l'intérieur de la cuve.

Pour diminuer ce risque de contamination, il est impératif de maintenir aussi propre que possible le local dans lequel se trouvent les cuves de procédé par des moyens qui peuvent être très onéreux (carrelage des sols et des murs, ou prévision de parois ou de plafonds en acier inoxydable ...) afin de permettre de nettoyer ce local aussi rigoureusement que possible. Dans un but similaire, on a également déjà proposé de pressuriser l'ensemble du local contenant les cuves de fermentation afin d'éviter son contact avec l'atmosphère extérieure.

Cependant, malgré leur prix de revient très élevé, toutes ces mesures ne sont pas de nature à donner satisfaction d'un point de vue strictement biologique, étant donné que les salles de traitement dans lesquelles se trouvent les cuves de procédé contiennent de nombreux appareillages mécaniques ou électriques qui ne peuvent pas être nettoyés de manière optimale (agitateur, électro-vanne, moteur, conduites d'alimentation en vapeur, eau froide ..., sonde de niveau, hublots d'éclairage, câbles électriques de toutes sortes ...).

De plus, les "mesures" anti-contamination susmentionnées ne peuvent pas être mis en oeuvre dans le cas fréquent de cuves de très grandes dimensions (de l'ordre de 50000 litres) telles que par exemple les cuves de caillage qui doivent obligatoirement être placées à l'extérieur ; or, l'air environnant des fromageries est loin d'être exempt de germes pathogènes ou agents contaminants (fumées, goudron, poussières, moisissures, etc ...).

La présente invention a pour objet de remédier aux inconvénients sus-mentionnés en proposant un procédé de prélèvement d'échantillons et/ou d'introduction d'additifs au contenu d'une cuve de traitement étanche munie d'organes de pressurisation ainsi que d'un orifice de prélèvement et d'introduction permettant de réduire les risques de contamination du contenu de la cuve lors de l'ouverture de cet orifice.

Ce procédé n'est bien entendu pas limité au cas de la protection du point de vue biologique des cuves de fermentation des fromageries, mais peut, comme il a été indiqué, s'adapter à des industries diverses, notamment alimentaires, pharmaceutiques ou chimiques.

Selon l'invention, ce procédé est caractérisé en ce que l'on incorpore entre la cuve de traitement et l'atmosphère du local dans lequel elle se trouve, une enceinte de protection dans laquelle le personnel peut effectuer les opérations nécessaires au niveau du contenu des cuves, munie d'organes de pressurisation associée à un sas et comportant une ouverture correspondant à l'orifice de prélèvement et d'introduction de la cuve de traitement à laquelle elle est soudée de manière étanche à ce niveau, on porte la cuve de traitement ainsi que l'enceinte de protection à une pression supérieure à celle du local, on ouvre l'orifice de prélèvement et d'introduction et on augmente légèrement la pression régnant dans la cuve de traitement de façon à créer entre celle-ci et l'enceinte de protection, un courant d'air dirigé de manière à exclure largement tout contact entre la cuve de traitement et l'atmosphère du local, et par la suite empêcher la contamination du contenu de celle-ci lors des opérations de prélèvement d'échantillons et/ou d'introduction d'additifs.

Ce procédé donne des résultats particulièrement satisfaisants du point de vue de la protection bactériologique des cuves de traitement, mais également sur le plan financier, étant donné que les enceintes de protection, préfabriquées en atelier, ont un volume relativement faible et sont d'un prix de revient et d'entretien sans commune mesure avec le coût nécessaire à la pressurisation de l'ensemble d'un local.

En outre, l'enceinte isole les parties mécaniques nécessitant un entretien courant et évite au personnel d'entretien l'utilisation d'outils affectés spécialement à la zone qui peut être stérile, ultra-propre, anti-déflagrante... un volume relativement faible et sont d'un prix de revient et d'entretien sans commune mesure avec le coût nécessaire à la pressurisation de l'ensemble d'un local.

En outre, l'enceinte isole les parties mécaniques nécessitant un entretien courant et évite au personnel d'entretien l'utilisation d'outils affectés spécialement à la zone qui peut être stérile, ultra-propre, antidéflagrante ...

En général, les cuves de traitement ne sont pas montés isolément, mais rassemblées par groupes constitués de généralement trois à huit cuves ; dans ce cas, il est avantageux d'associer à un groupe de cuves de traitement, une seule enceinte de protection dont la géométrie est choisie en fonction de celle de ce groupe.

L'invention se rapporte également à un dispositif pour la mise en oeuvre du procédé susmentionné.

Ce dispositif est caractérisé en ce qu'il se compose d'une enceinte de protection munie d'organes de pressuration et dans laquelle le personnel peut effectuer les opérations nécessaires au niveau du contenu des cuves, cette enceinte coopérant avec une pré-cuve faisant office de sas et munie d'un nombre d'ouvertures correspondant au nombre de cuves de traitement auquel elle est associée.

Etant donné que les cuves de traitement sont généralement de grande dimension, et comportant un orifice de prélèvement et d'introduction situé à leur partie supérieure, l'enceinte de protection ainsi que la pré-cuve qui lui sont associées reposent souvent sur des pieds, et sont munies d'un escalier permettant au personnel d'y accéder.

Conformément à l'invention, l'enceinte de protection peut être en un matériau quelconque, mais, pour des raisons aussi bien d'ordre pratique que biologique, on opte le plus souvent pour une cuve métallique, notamment en acier inoxydable, qui présente l'avantage d'être d'une fabrication relativement bon marché, d'un nettoyage facile, et parallèlement de permettre une liaison étanche facile par soudure avec les cuves de traitement, au niveau des orifices de prélèvement et d'introduction de celles-ci.

Les cuves de traitement sont le plus souvent de forme essentiellement cylindrique, et sont fermées à leur partie supérieure par une extrémité conique sur laquelle est percé l'orifice de prélèvement et d'introduction.

Selon une caractéristique avantageuse de l'invention, lui permettant de coopérer avec des cuves de traitement classiques de ce type, l'enceinte de protection, de forme essentiellement cylindrique ou parallélépipèdique, est munie d'au moins un épaulement destiné à coopérer avec l'extrémité conique de la ou des cuves de traitement à laquelle ou auxquelles elle est associée.

Cette configuration facilite la liaison de l'enceinte de protection et de la ou des cuves de traitement au niveau des orifices ou ouvertures de celles-ci, et permet par suite de faciliter l'obtention d'une étanchéité satisfaisante.

Selon une autre caractéristique de l'invention, l'enceinte de protection est munie d'un circuit de lavage, fonctionnant notamment en circuit fermé qui comporte une conduite d'introduction débouchant à sa partie supérieure par une buse de pulvérisation ainsi qu'une conduite d'évacuation montée à la partie inférieure de cette cuve et munie de préférence d'un siphon afin d'empêcher largement toute contamination par l'air extérieur à ce niveau.

La présence de ce circuit permet un nettoyage optimal de l'enceinte de protection.

Pour que le dispositif sus-mentionné donne entière satisfaction, il est bien entendu indispensable d'éviter toute contamination du fait du personnel pénétrant dans l'enceinte de protection afin d'effectuer les opérations d'introduction et de prélèvement nécessaires ; celui-ci doit donc revêtir au niveau de la pré-cuve ou du sas des vêtements stériles.

La pré-cuve peut, par ailleurs, être désolidarisée des systèmes et intégrée en amont de la chaîne.

Les caractéristiques du dispositif ainsi que du procédé faisant l'objet de l'invention seront décrites plus en détail en se référant aux dessins annexés dans lesquels :

— la figure 1 est une vue de dessus d'un dispositif conforme à l'invention,

— la figure 2 est une coupe schématique de la figure 1 selon l'axe II-II,

— la figure 3 est une vue latérale schématique d'un autre mode de réalisation de l'installation conforme à l'invention,

— la figure 4 est une coupe schématique suivant A-A de la figure 3.

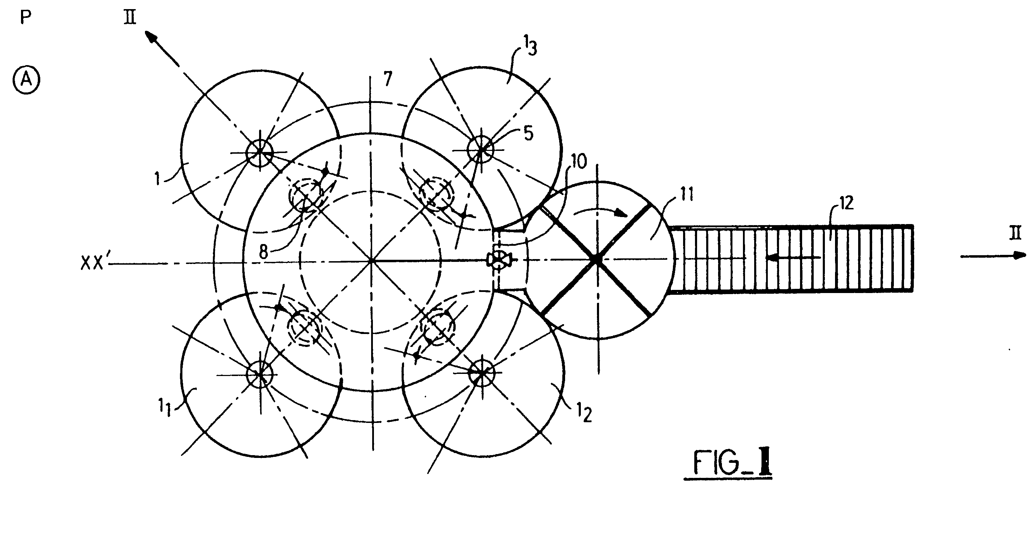

Selon la figure 1, l'invention s'applique à un local A placé sous une pression P et contenant quatre cuves de fermentation 1, $1_1$, $1_2$, et $1_3$ montées symétriquement autour d'un axe vertical x-x'.

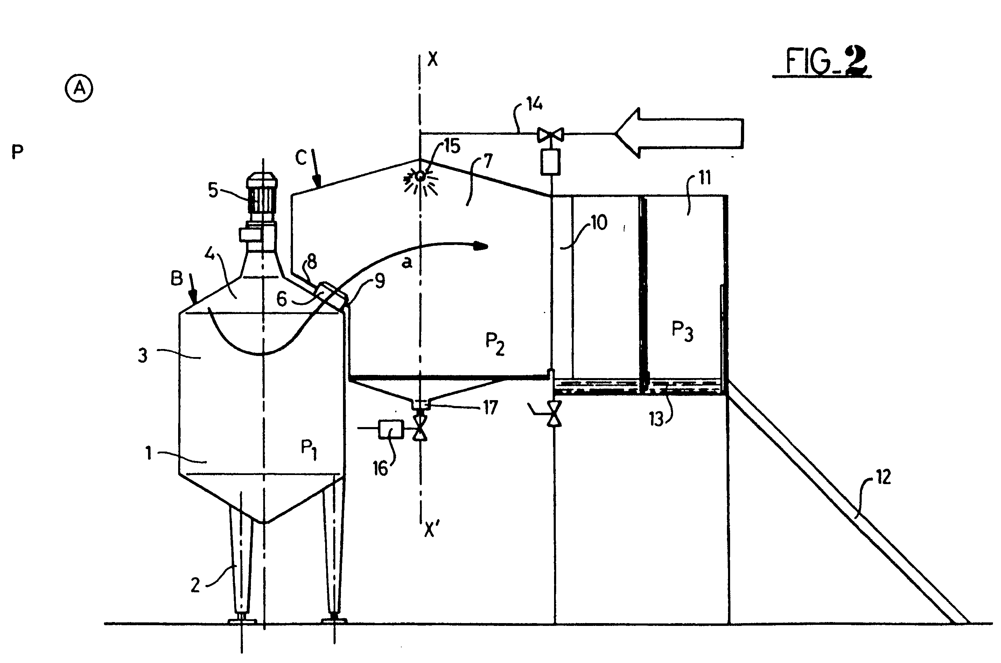

Selon la figure 2, chaque cuve 1 dont la contenance peut aller jusqu'à 60000 litres et plus, repose sur des pieds 2 et est constituée par une partie principale 3 approximativement cylindrique fermée à son extrémité supérieure par une partie 4 en forme de cône au sommet de laquelle est montée un moteur 5 de commande d'un agitateur non représenté.

Selon les figures 1 et 2, les parois de la partie conique 4 des cuves de fermentation 1 comportent une ouverture 6 susceptible d'être fermée de façon étanche, et d'être ouverte de manière à permettre le prélèvement d'échantillons et/ou l'introduction d'additifs au contenu de la cuve.

Des organes représentés schématiquement par la flèche B permettent la mise sous pression de la partie interne de la cuve 1, ainsi que l'introduction dans celle-ci, d'un courant d'air stérile ou gaz neutre.

Par ailleurs, et selon la figure 1, les cuves de fermentation 1, $1_1$, $1_2$, et $1_3$ sont réunies, à leur partie centrale, par une enceinte de protection 7 en acier inoxydable qui comporte des ouvertures 8 correspondant aux orifices de prélèvement 6 des cuves de fermentation 1.

Selon la figure 2, la cuve 7 a une forme essentiellement cylindrique ou parallélépipèdique, et est munie au niveau de la partie supérieure conique 4 des cuves 1, d'épaulements 9 comportant les ouvertures 8 leur permettant de s'appliquer parfaitement à ce niveau contre les parois latérales des cuves 1, auxquelles elles sont soudées, à la périphérie des ouvertures 8 et des orifices 6, de façon à garantir l'étanchéité de l'ensemble ainsi constitué.

Selon les figures 1 et 2, la cuve 7 est par ailleurs munie d'une ouverture 10 permettant le passage du personnel chargé de la mise en oeuvre des diverses opérations nécessaires au niveau du contenu des cuves 1 et par laquelle elle coopère avec une pré-cuve 11 faisant office de sas, dans laquelle le personnel venant du local A peut pénétrer par l'escalier 12, pour revêtir des vêtements étanches, et passer dans un pré-cuve 13, avant d'effectuer les diverses opérations d'additions et de prélèvement sur le contenu des cuves 1 de façon à diminuer au maximum les risques de contamination de celui-ci.

Dans le même but, il est nécessaire que la partie interne de l'enceinte de protection 7 soit maintenue aussi propre que possible ; celle-ci est, à cet effet, associée à un circuit de lavage comportant une conduite d'introduction 14 débouchant à sa partie supérieure par une buse de pulvérisation 15 ainsi qu'une conduite d'évacuation 16 montée à la partie inférieure de cette cuve 7 et munie d'un siphon 17 pour éviter toute contamination à ce niveau.

Des organes de pressurisation représentés schématiquement par la flèche C (figure 2) permettent de régler la pression régnant dans l'enceinte de protection 7 à un niveau un peu supérieur à celle P du local A. Pour avoir une protection optimale contre la contamination, et éviter au maximum tout échange de germes entre le contenu des cuves 1 et l'atmosphère extérieure, il est nécessaire d'avoir une décroissance continue de la pression entre les cuves de fermentation 1, la cuve de traitement 7, la pré-cuve 11 et le local A.

La mise en oeuvre du procédé conforme à l'invention est la suivante :

En début d'opération, les pressions régnant dans les cuves de fermentation 1, l'enceinte de protection 7 et la pré-cuve 11 sont respectivement réglées à des valeurs $P_1$, $P_2$ et $P_3$ légèrement supérieures à la pression P et allant en décroissant. La pression $P_1$ est en général supérieure de 50 à 100 grammes à la pression P.

Lorsqu'il a pénétré dans l'enceinte de protection 7, le manoeuvre chargé des opérations d'introduction et/ou de prélèvement agit sur les organes de pressurisation B afin d'abaisser la pression $P_1$ régnant dans la cuve 1 dans laquelle il désire effectuer des manipulations au niveau de la pression $P_2$ de l'enceinte de protection 7 afin de pouvoir ouvrir l'orifice 6 de prélèvement et d'introduction et accéder à l'intérieur de la cuve ; à ce moment, il commande l'introduction dans la cuve 1 d'un courant d'air stérile qui balaie cette cuve ainsi que l'enceinte de protection 7 comme représenté schématiquement par la flèche a, pour empêcher tout passage d'air en sens inverse.

L'enceinte 7 peut, par ailleurs, être climatisée, isolée pour adopter la température de l'atmosphère ambiante ou conditionnée (gaz neutre) à la compatibilité avec le produit traité dans la cuve.

Ce procédé permet ainsi d'éviter efficacement toute contamination du produit contenu dans les cuves 1 pendant les manipulations nécessaires.

Bien entendu, et comme il a déjà été indiqué précédemment, la description ci-dessus, et en particulier la géométrie choisie ne doivent être considérées qu'à titre d'exemple et, le procédé ainsi que le dispositif qui font l'objet de l'invention, pourraient être adaptés à des traitements autres que l'industrie fromagère, en particulier, l'industrie pharmaceutique.

Il convient, par ailleurs, de souligner qu'un dispositif du type sus-mentionné pourrait être adapté de façon particulière avantageuse à des cuves de traitement situées à l'extérieur, pour permettre de relier directement celles-ci au corps central de l'usine ou du laboratoire et par conséquent, assurer la protection vis-à-vis des intempéries du personnel chargé des manipulations.

Il convient de noter que ce procédé, conforme à l'invention, peut être adapté aussi en sens inverse, par exemple dans la chimie, si la cuve contient des produits toxiques ou inflammables quine doivent pas entrer en contact avec la salle de fabrication.

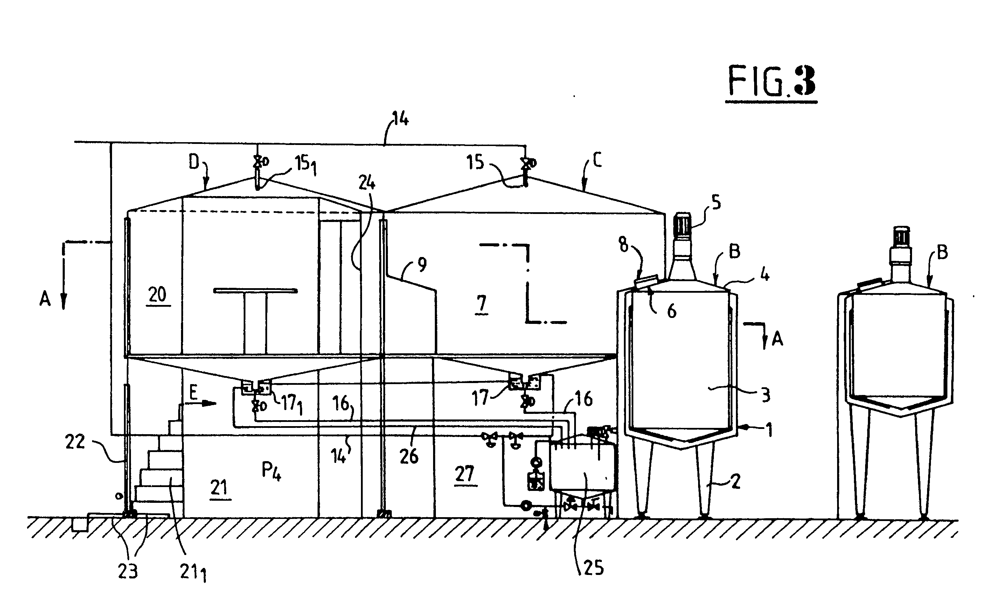

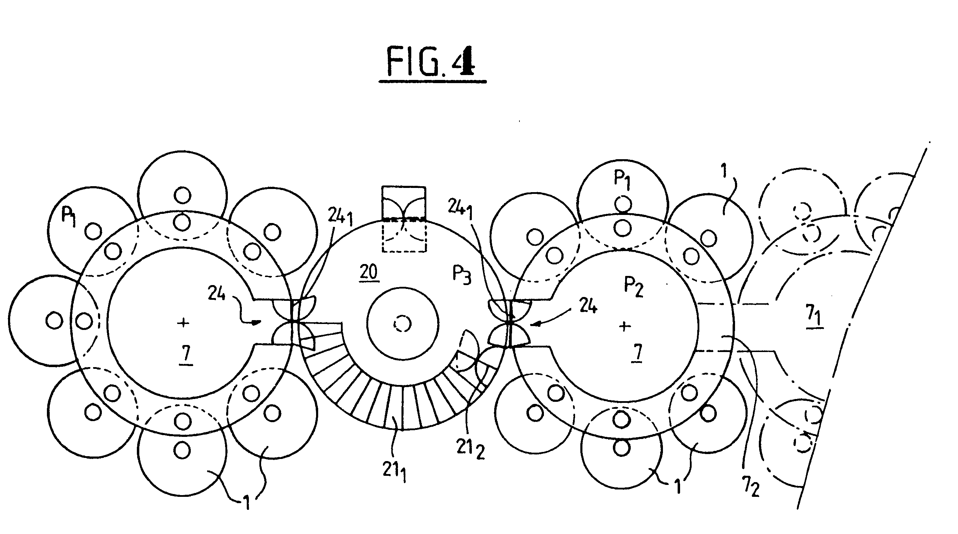

Selon l'exemple de réalisation des figures 3 et 4, les cuves de traitement 1 et notamment, de fermentation, dont on doit protéger le contenu de tout contact avec l'air extérieur, sont disposées autour de plusieurs enceintes de protection 7 et ces diverses enceintes 7 sont disposées à la manière de satellites autour d'une cellule de préparation 20 qui est située au même niveau que les enceintes de protection 7 des divers groupes de cuves. Cette cellule de préparation 20 est par ailleurs située au-dessus d'un sas 21 avec lequel elle communique par un escalier, ce sas 21 constituant un déshabilloir dans lequel le personnel pénètre par une porte d'entrée 22 pourvue d'une pré-cuve 23.

Chaque cuve 1 reposant sur des pieds 2, se compose d'une partie cylindrique 3 surmontée d'une partie conique 4 supportant à son sommet un moteur électrique 5 entraînant un agitateur (non représenté) plongeant dans la cuve. La partie conique 4 de la cuve 1 présente une ouverture 6 pourvue de moyens de fermeture étanches, et qui est destinée à être ouverte pour permettre le prélèvement d'échantillons et/ou l'introduction d'additifs au contenu de la cuve.

Des organes B sont destinés à mettre sous pression la partie interne de chaque cuve à l'aide d'un air stérile ou d'un gaz neutre.

L'enceinte de protection 7 de chaque groupe de cuves 1 est pourvue d'un épaulement circulaire 9 comportant des ouvertures 8 fixées de manière étanche, par soudure, autour des ouvertures 6 des cuves 1.

Chaque enceinte de protection 7 comporte une ouverture 24 pourvue d'un moyen de fermeture non étanche $24_1$ permettant le passage du personnel entre la cellule de préparation 20 et chacune des enceintes 7.

Chacune des enceintes de protection 7, ainsi que la cellule de préparation 20, est disposée dans un circuit de lavage comportant une conduite principale 14 d'alimentation en produit désinfectant qui débouche par des buses de pulvérisation 15 et $15_1$ respectivement à l'extrémité supérieure des enceintes 7 et de la cellule 20.

Par ailleurs, les enceintes 7 et la cellule 20 comportent à leur extrémité inférieure des siphons hydrauliques 17, $17_1$ reliés à une conduite d'évacuation 16 assurant la récupération du liquide de lavage dans une citerne 25. Le liquide récupéré est alors filtré et à nouveau désinfecté afin d'alimenter la conduite 14.

Cette disposition constitue donc un circuit fermé permettant le lavage des enceintes et de la cellule lorsque cela est jugé souhaitable.

Les enceintes 7, la cuve 20 et le sas 21 sont reliés à des organes de pressurisation, respectivement C, D et E, les surpressions étant réglées de façon à aller en décroissant depuis les enceintes de protection 7 et jusqu'au sas 21 en passant par la cellule de préparation 20 pour terminer à la pression atmosphérique extérieure.

Par ailleurs, la surpression d'air filtré ou de gaz neutre introduit dans la cuve 1, est établie de façon à être légèrement supérieure à la surpression des enceintes 7 lorsque l'on procède, par l'ouverture 6, à un prélèvement du contenu de la cuve ou, au contraire, à l'introduction dans cette cuve d'un additif.

Ainsi, du fait de cette surpression étagée décroissante, il s'établit en permanence un léger courant d'air s'écoulant des enceintes 7 vers la cellule 20 par l'intermédiaire des portes non étanches 24 et de la cellule 20 vers le sas 21, par l'intermédiaire de l'escalier $21_1$, et ensuite vers l'extérieur.

L'extrémité inférieure de cet escalier est également, et de préférence, pourvue d'un dispositif de fermeture non étanche $21_2$.

L'ensemble de ces dispositions permet d'éviter au maximum toute contamination du contenu des cuves par les germes d'origine externe.

Les surpressions étagées seront déterminées de façon à établir un débit d'air ajusté en fonction des normes de renouvellement d'air qui dépendent du nombre de personnes présentes dans les enceintes de protection ou dans la cellule de préparation 20.

Les surpressions d'air de chaque enceinte et de la cellule sont contrôlées et régulées par divers dispositifs et, notamment, par les siphons 17 et $17_1$, qui contiennent une hauteur de désinfectant en rapport avec la pression requise. Ce dispositif sûr présente le double avantage d'éviter les surpressions d'air dans les cellules ou dans l'enceinte et de permettre la désinfection, par barbotage, de l'air qui accidentellement pourrait être appelé de l'extérieur lors d'une dépression interne.

Pour pallier au phénomène d'évaporation naturel du liquide désinfectant contenu dans les siphons 17, $17_1$, il est prévu une circulation permanente de désinfectant par des canalisations 26 qui alimentent en série les divers siphons par l'intermédiaire d'un circuit fermé incluant la citerne de stockage 25.

Ces siphons sont pourvus de dispositifs assurant un niveau constant du liquide désinfectant.

De préférence, la citerne 25 ainsi que l'ensemble des organes techniques nécessaires au fonctionnement correct du dispositif, seront inclus dans un local technique 27 qui, dans l'exemple représenté sur la figure 1, est adjacent du sas 21 et est disposé en-dessous d'une enceinte 7.

La cellule 20 est équipée de tous les accessoires compatibles avec les conditions d'hygiène du milieu et permettant au personnel d'effectuer les opérations de transfert de milieu, de dilution, de concentration, de micro-organismes ou de toute autre manipulation rendue nécessaire après prélèvement d'échantillons des cuves 1 ou avant introduction d'un additif dans l'une ou l'autre de ces cuves. Ce personnel aura préalablement revêtu des vêtements stériles se trouvant à leur disposition dans le sas 21 et cela avant qu'il ne monte dans la cellule 20 par l'escalier $21_1$.

Enfin, comme cela est représenté sur la figure 4, l'enceinte de protection 7 peut servir de lien entre la cellule 20 et une autre enceinte 7, elle-même associée à un groupe de cuves 1. Dans ce cas, l'enceinte intermédiaire est reliée à cette enceinte $7_1$ par un passage $7_2$ comportant également une fermeture non étanche et la surpression dans l'enceinte 7 est établie à un niveau légèrement inférieur à celle de l'enceinte $7_1$ afin de produire un léger courant d'air s'écoulant par le passage $7_2$ vers la cellule 20 par l'enceinte 7.

Bien que la cellule de préparation 20, encore appelée cellule de repiquage, puisse être réalisée en génie civil, il est préférable de la réaliser sous la forme d'une cuve métallique, notamment en acier inoxydable, qui présente l'avantage d'être d'une fabrication relativement bon marché, d'un nettoyage facile, et prémontée en atelier parallèlement à la réalisation des enceintes de protection.

Le matériel de travail équipant la cellule de préparation est conforme aux normes d'hygiène et le renouvellement d'air est assuré en fonction du nombre de personnes présentes.

Enfin, les organes techniques de lavage sont situés dans un local sous l'enceinte de protection.

## Revendications

1. Procédé de prélèvement d'échantillons et/ou d'introduction d'additifs au contenu d'une cuve de traitement étanche (1) munie d'organes de pressurisation (B) ainsi que d'un orifice (6) de prélèvement et d'introduction permettant d'éviter la recontamination du contenu de la cuve (1) lors de l'ouverture de cet orifice, procédé caractérisé en ce que l'on incorpore entre la cuve de traitement (1) et l'atmosphère (P) du local (A) dans lequel elle se trouve, une enceinte de protection (7) dans laquelle le personnel peut effectuer les opérations nécessaires au niveau du contenu des cuves, munie d'organes de pressurisation (C) associée à un sas (11) et comportant une ouverture (8) correspondant à l'orifice de prélèvement et d'introduction (6) de la cuve de traitement (1) à laquelle elle est soudée de manière étanche à ce niveau, on porte la cuve de traitement (1) ainsi que l'enceinte de protection (7) à une pression ($P_2$) supérieure à celle du local (A), on ouvre l'orifice (6) de prélèvement et d'introduction et on augmente légèrement la pression régnant dans la cuve de traitement (1) de façon à créer entre celle-ci et l'enceinte de protection (7), un courant d'air (a) dirigé de manière à exclure largement tout contact entre la cuve de traitement (1) et l'atmosphère du local (A), et par suite empêcher la contamination du contenu de celle-ci lors des opérations de prélèvement d'échantillons et/ou d'introduction d'additifs.

2. Procédé selon la revendication 1, caractérisé en ce que l'on associe une seule enceinte de protection (1) à plusieurs cuves de traitement (1, $1_1$, $1_2$, $1_3$).

3. Procédé conforme à la revendication 2, caractérisé en ce qu'on relie l'enceinte de protection (7) à plusieurs cuves de traitement (1) pour former un groupe de cuves de traitement et on relie plusieurs de ces groupes à une même cellule (20) dite de préparation, qui est elle-même reliée au sas d'entrée (21).

4. Dispositif pour la mise en oeuvre du procédé selon l'une quelconque des revendications précédentes, caractérisé en ce qu'il se compose d'une enceinte de protection (7) munie d'organes de pressurisation et dans laquelle le personnel peut effectuer les opérations nécessaires au niveau du contenu des cuves, cette enceinte coopérant avec une pré-cuve (11) faisant office de sas et munie d'un nombre d'ouvertures (8) correspondant au nombre de cuves de traitement (1) auxquelles elle est associée.

5. Dispositif selon la revendication 4, caractérisé en ce que l'enceinte de protection est métallique, notamment en acier inoxydable.

6. Dispositif selon l'une quelconque des revendications 4 et 5, destiné à coopérer avec au moins une cuve de traitement (1) essentiellement cylindrique, munie d'une extrémité supérieure conique (4), dispositif caractérisé en ce que l'enceinte de protection (7), de forme essentiellement cylindrique est munie d'au moins un épaulement (9) destiné à coopérer avec cette extrémité conique (4).

7. Dispositif selon l'une quelconque des revendications 4 à 6, caractérisé en ce que l'enceinte de protection (7) est munie d'un circuit de lavage comportant une conduite d'introduction (14) débouchant à sa partie supérieure par une buse de pulvérisation (15) ainsi qu'une conduite d'évacuation (16) montée à la partie inférieure de cette cuve (7).

8. Dispositif selon la revendication 7, caractérisé en ce que la conduite d'évacuation (16) comporte un siphon (17).

9. Dispositif conforme à l'une quelconque des revendications de 4 à 8 du procédé conforme à la revendication 3, caractérisé en ce que le sas d'entrée est disposé sous la cellule de préparation (20) avec laquelle il communique par un escalier ($21_1$), la cellule de préparation (20) étant disposée au même niveau que les diverses enceintes de protection (7).

10. Dispositif conforme à la revendication 9, caractérisé en ce que les diverses enceintes de protection (7) des groupes de cuves de traitement (1), sont reliées à la cellule de préparation (20) par des passages (24) pourvus de dispositifs de fermeture non étanches ($24_1$).

11. Dispositif conforme à l'une quelconque des revendications 10 et 11, caractérisé en ce que la cellule de préparation (20) est pourvue d'un système de désinfection (14) fonctionnant en circuit fermé et comprenant une citerne (25) de stockage du liquide désinfectant et au moins une buse (15), d'aspersion de ce liquide désinfectant dans la cellule de préparation (20).

12. Dispositif conforme à l'une quelconque des revendications de 10 à 11, caractérisé en ce que les enceintes de protection (7), la cellule de préparation (20) et le sas d'entrée (21) comportent des organes de pressurisation (C, D, E) réglés de façon à établir de légères surpressions allant en décroissant depuis les enceintes de protection jusqu'au sas d'entrée en passant par la cellule de préparation.

13. Dispositif conforme à l'une quelconque des revendications de 10 à 12, caractérisé en ce que les enceintes de protection (7) et la cellule de préparation (20) comportent à leur base un siphon (17, $17_1$) contenant un liquide désinfectant et assurant un réglage de la surpression de ces enceintes et cellule, ces siphons étant reliés à un circuit ($16_1$) d'alimentation permanente de désinfectant comportant des contacteurs de niveau.

14. Dispositif conforme à l'une quelconque des revendications de 10 à 13, caractérisé en ce que l'enceinte de protection (71) d'un groupe de cuves de traitement, reliée à une cellule de préparation (20), eut elle-même reliée à une autre enceinte de protection ($7_1$) d'un autre groupe de cuves (1).

15. Dispositif conforme à l'une quelconque des revendications 10 à 14, caractérisé en ce que la cellule de préparation (20) est constituée par une cuve métallique, notamment en acier inoxydable.

16. Dispositif conforme à l'une quelconque des revendications 10 à 15, caractérisé en ce que les organes techniques de lavage sont situés dans un local sous l'enceinte de protection.

**Patentansprüche**

1. Verfahren zur Probenentnahme und/oder zum Einführen von Zugaben zum Inhalt mindestens eines dicht geschlossenen Behandlungstanks (1), der mit Mitteln (B), um ihn unter Druck zu setzen, sowie mit einer Entnahme- und Einführöffnung (6) versehen ist, bei der während der Öffnung die Kontamination des Inhalts des Tanks (1) vermieden ist, dadurch gekennzeichnet, daß zwischen den Behandlungstank (1) und die Atmosphäre (P) des Ortes, an dem er sich befindet, ein Schutzgehäuse (7) eingefügt wird, in welchem das Personal die notwendigen Operationen auf dem Niveau des Behälterinhalts ausführen kann, der mit Druckausübungsmitteln (C) versehen ist, der einer Schleusenkammer (11) zugeordnet ist und der eine Öffnung (8) umfaßt, die der Entnahme- und Einführöffnung (6) des Behandlungstanks entspricht und auf diesem Niveau damit dicht verschweißt ist, daß der Behandlungstank (1) ebenso wie das Schutzgehäuse (7) auf einem über dem Druck des Ortes (A) gelegenen Druck ($P_2$) gehalten werden, daß die Entnahme- und Einführöffnung (6) geöffnet und der in dem Behandlungstank (1) herrschende Druck leicht erhöht werden, so daß zwischen dem Behandlungstank (1) und dem Schutzgehäuse (7) eine Luftströmung (a) erzeugt wird, die so gerichtet ist, daß im wesentlichen jeglicher Kontakt zwischen dem Behandlungstank (1) und der Atmosphäre des Ortes (A) unterbunden und infolgedessen die Kontamination des Inhalts des Behandlungstanks (1) während der Operationen der Probenentnahme und/oder der Einführung von Zugaben verhindert wird.

2. Verfahren nach Anspruch 1, dadurch gekennzeichnet, daß ein einziges Schutzgehäuse (7) mehreren Behandlungstanks (1, $1_1$, $1_2$, $1_3$) zugeordnet wird.

3. Verfahren nach Anspruch 2, dadurch gekennzeichnet, daß ein Schutzgehäuse (7) mit mehreren Behandlungstanks (1) zur Bildung einer Gruppe von Behandlungstanks verbunden und mehrerer solcher Gruppen mit ein und derselben Präparationskammer (20) verbunden werden, die ihrerseits mit der Eingangschleuse (21) verbunden wird.

4. Vorrichtung zur Durchführung des Verfahrens nach einem der vorangehenden Ansprüche, dadurch gekennzeichnet, daß sie aus einem Schutzgehäuse (7) besteht, welches mit Druckerzeugungsorganen versehen ist und in welchem das Personal auf der Höhe des Inhalts der Tanks die notwendigen Operationen durchführen kann, wobei das Schutzgehäuse mit einer Vorkammer (11) zusammenwirkt, die eine Eingangsschleuse bildet und mit einer Anzahl von Öffnungen (8) versehen ist, die der Zahl der Behandlungstanks (1) entsprechen, denen es zugeordnet ist.

5. Vorrichtung nach Anspruch 4, dadurch gekennzeichnet, daß das Schutzgehäuse aus Metall, insbesondere aus nichtoxidierbarem Stahl, besteht.

6. Vorrichtung nach Anspruch 4 oder 5, welche zum Zusammenwirken mit mindestens einem im wesentlichen zylindrischen, eine konische Oberseite (4) aufweisenden Behandlungstank (1) bestimmt ist, dadurch gekennzeichnet, daß das Schutzgehäuse (7) eine im wesentlichen zylindrische Form aufweist und mindestens eine Schulter (9) umfaßt, die zum Zusammenwirken mit der konischen Oberseite (4) bestimmt ist.

7. Vorrichtung nach einem der Ansprüche 4 bis 6, dadurch gekennzeichnet, daß das Schutzgehäuse (7) mit einem Waschkreislauf versehen ist, der eine im oberen Teil des Schutzgehäuses (7) in einer Zerstäubungsdüse (15) mündende Einlaßleitung (14) und eine im unteren Teil der Behandlungskammer (7) angeschlossene Auslaßleitung (16) umfaßt.

8. Vorrichtung nach Anspruch 7, dadurch gekennzeichnet, daß die Auslaßleitung (16) einen Siphon (17) umfaßt.

9. Vorrichtung nach einem der Ansprüche 4 bis 8 zur Durchführung des Verfahrens nach Anspruch 3, dadurch gekennzeichnet, daß die Eingangsschleuse unter der Präparationskammer (20) angeordnet ist und mit dieser über eine Treppe (21₁) in Verbindung steht, wobei sich die Präparationskammer (20) auf der gleichen Höhe wie die verschiedenen Schutzgehäuse (7) befindet.

10. Vorrichtung nach Anspruch 9, dadurch gekennzeichnet, daß die verschiedenen Schutzgehäuse (7) der Gruppen von Behandlungstanks (1) mit der Präparationskammer (20) über Durchgänge (24) verbunden sind, die nicht dichte Schließorgane (24₁) aufweisen.

11. Vorrichtung nach Anspruch 10 oder 11, dadurch gekennzeichnet, daß die Präparationskammer (20) mit einem Desinfektionssystem (14) versehen ist, welches in geschlossenem Kreislauf arbeitet und einen Vorratsbehälter (25) für Desinfektionsflüssigkeit und mindestens eine Düse (15) zum Verspringen der Desinfektionsflüssigkeit in der Präparationskammer (20) umfaßt.

12. Vorrichtung nach Anspruch 10 oder 11, dadurch gekennzeichnet, daß die Schutzgehäuse (7), die Präparationskammer (20) und die Eingangsschleuse (21) Druckorgane (C, D, E) aufweisen, die so geregelt sind, daß sie leichte Überdrücke erzeugen, die von den Schutzgehäuse über die Präparationskammer bis zu der Eingangsschleuse abnehmen.

13. Vorrichtung nach einem der Ansprüche 10 bis 12, dadurch gekennzeichnet, daß die Schutzgehäuse (7) und die Präparationskammer (20) in ihrem unteren Bereich einen Siphon (17, 17₁) umfassen, der eine Desinfektionsflüssigkeit enthält und die Regelung des Überdrucks der Schutzgehäuse und der Präparationskammer gewährleistet, wobei die Siphons an einen dauernd arbeitenden Speisekreis (16₁) für Desinfektionsmittel angeschlossen sind, der Niveausensoren umfaßt.

14. Vorrichtung nach einem der Ansprüche 10 bis 13, dadurch gekennzeichnet, daß das mit einer Präparationskammer (20) verbundene Schutzgehäuse (7) einer Gruppe von Behandlungstanks seinerseits mit einem anderen Schutzgehäuse (7₁) einer anderen Gruppe von Behandlungstanks (1) verbunden ist.

15. Vorrichtung nach einem der Ansprüche 10 bis 14, dadurch gekennzeichnet, daß die Präparationskammer (20) aus einem metallischen Behälter, insbesondere aus nichtoxidierbarem Stahl, besteht.

16. Vorrichtung nach einem der Ansprüche 10 bis 15, dadurch gekennzeichnet, daß die technischen Einrichtungen der Waschanlage sich an einem Ort unterhalb des Schutzgehäuses befinden.

## Claims

1. Process for taking samples and/or introducing additives to the contents of a sealed treatment vessel (1), provided with pressurising devices (B) as well as with an aperture (6), for sampling and introducing additives, enabling recontamination of the contents of the vessel (1) while this aperture is open to be avoided, which process is characterised in that it incorporates, between the treatment vessel (1) and the atmosphere (P) of the room (A) in which it is located, a protection chamber (7) in which the personnel are able to carry out the necessary operations with respect to the contents of the vessel, the chamber being provided with pressurising devices (C) connected to an air chamber (11) and comprising an opening (8) corresponding to the aperture (6) for sampling and introducing additives which is located on the treatment vessel (1) to which it is welded, in a sealed manner, at this level ; the treatment vessel (1), together with the protection chamber (7), is brought to a pressure (P₂) which is greater than that of the room (A), the aperture (6) for sampling and introducing additives is opened and the pressure within the treatment vessel (1) is increased slightly so as to create a current of air (a) between it and the protection chamber directed such that any contact between the treatment vessel (1) and the atmosphere of the room (A) is substantially excluded, and thus contamination of the contents of the former is prevented in the course of sampling and/or the introduction of additives.

2. process according to claim 1, characterised in that a single protection chamber (1) is connected to a plurality of treatment vessels (1, 1₁, 1₂, 1₃).

3. process according to claim 2, characterised in that the protection chamber (7) is connected to a plurality of treatment vessels (1) to form a group of treatment vessels, and a plurality of these groups is connected to a single cell (20), known as the preparation cell, which is itself connected to the inlet air chamber (21).

4. Device for performing the process according to any one of the preceding claims, characterised in that it comprises a protection chamber (7) which is provided with pressurising devices and in which the personnel are able to carry out the necessary operations with respect to the contents of the vessels, this chamber co-operating with a preliminary vessel (11) which acts as an air chamber and is provided with a number of apertures (8) corresponding to the number of treatment vessels (1) to which it is connected.

5. Device according to claim 4, characterised in that the protective chamber is made of metal, in particular stainless steel.

6. Device according to either one of claims 4 and 5, for cooperating with at least one essentially cylindrical treatment vessel (1), provided with a conical upper end (4), which device is characterised in that the essentially cylindrical protection chamber (7) is provided with at least one shoulder (9) for co-operating with this conical end (4).

7. Device according to any one of claims 4 to 6, characterised in that the protection chamber (7) is provided with a washing circuit comprising an inlet duct (14), which opens out in its upper part into a spraying nozzle (15), and an outlet duct (16) mounted on the lower part of this vessel (7).

8. Device according to claim 7, characterised in that the outlet duct (16) comprises a siphon (17).

9. Device according to any one of claims 4 to 8 for the process according to claim 3, characterised in that the inlet air chamber is disposed under the preparation cell (20) to which it is connected by a staircase (21$_1$), the preparation cell (20) being disposed at the same level as the various protection chambers (7).

10. Device according to claim 9, characterised in that the various protection chambers (7) of the groups of treatment vessels (1) are connected to the preparation cell (20) by passages (24) provided with closing devices (24$_1$) which are not leaktight.

11. Device according to either one of claims 10 and 11, characterised in that the preparation cell (20) is provided with a disinfecting system (14) which operates in a closed circuit and comprises a cistern (25) for storing the disinfectant liquid and at least one nozzle (15) for sprinkling this disinfectant liquid in the preparation cell (20).

12. Device according to any one of claims 10 and 11, characterised in that the protection chambers (7), the preparation cell (20) and the inlet air chamber (21) comprise pressurising devices (C, D, E) regulated so as to establish slight excess pressures, which decrease from the protection chambers to the inlet air chamber passing via the preparation cell.

13. Device according to any one of claims 10 to 12, characterised in that the protection chambers (7) and the preparation cell (20) comprise, at their base, a siphon (17, 17$_1$) which contains a disinfectant liquid and regulates the excess pressure in these vessels and this cell, these siphons being connected to a permanent disinfectant supply circuit (16$_1$) which comprises the level contacts.

14. Device according to any one of claims 10 to 13, characterised in that the protection chamber (7) of one group of treatment vessels, which is connected to a prearation cell (20), is itself connected to a further protection chamber (71) of a further group of vessels (1).

15. Device according to any one of claims 10 to 14, characterised in that the preparation cell (20) is comprised of a metal vessel, in particular of stainless steel.

16. Device according to any one of claims 10 to 15, characterised in that the technical washing devices are situated in an area below the protection chamber.

FIG_1

FIG_2

EP 0 336 048 B1

FIG.3

EP 0 336 048 B1

# FIG.4

EP 0 336 048 B1